# EUROPEAN PATENT APPLICATION

(11) **EP 2 317 126 A2**
(43) Date of publication of application: **04.05.2011**
(21) Application number: 10188884.0
(22) Date of filing: 26.10.2010
(51) Int. Cl.: F03D 1/06, F03D 11/00

(54) **Methods of manufacture of wind turbine blades and other structures**

(30) Priority: 30.10.2009 US 609086
(71) Applicant: General Electric Company, Schenectady, NY 12345 (US)
(72) Inventor: Mathew, Jaish, 560066, Bangalore (IN)
(74) Representative: Bedford, Grant Richard

(57) **Abstract**

A method of manufacturing a rib-stiffened shell 50 for a structure, wherein the rib-stiffened shell 50 comprises an outer skin 56 supported by a plurality of fiber ribs 54, the fiber ribs 54 comprising thickened strips of substantially unidirectional fiber, and wherein the fiber ribs 54 comprise a crisscrossing pattern that includes a plurality of junctions, the junctions 58 comprising an intersection of two or more of the fiber ribs 54, the method comprising the steps of: configuring a convex mold 70, the shape of which corresponds to the contour of the outer skin 56 of the structure; configuring a plurality of grooves 74 in the convex surface of the convex mold 70 that correspond to the pattern of the fiber ribs 54; laying up unidirectional fiber in the grooves 74 of the convex mold 70; and applying the outer skin 56 over the convex surface of the convex mold 70.

## Description

This present application relates generally to methods, systems, and/or apparatus concerning the structure and construction of the rotor blades of wind turbines. More specifically, but not by way of limitation, the present application relates to methods, systems, and/or apparatus pertaining to improved structural configurations and construction methods pertaining to the airfoils of wind turbine rotor blades and other structures.

A wind turbine is a machine for converting the kinetic energy in wind into mechanical energy. If that mechanical energy is used directly by machinery, such as to pump water or to grind wheat, then the wind turbine may be referred to as a windmill. Similarly, if the mechanical energy is further transformed into electrical energy, then the turbine may be referred to as a wind generator or wind power plant.

Wind turbines use one or more airfoils in the form of a "blade" to generate lift and capture momentum from moving air that is then imparted to a rotor. Each blade is typically secured at its "root" end, and then "spans" radially "outboard" to a free, "tip" end. The front, or "leading edge," of the blade connects the forward-most points of the blade that first contact the air. The rear, or "trailing edge," of the blade is where airflow that has been separated by the leading edge rejoins after passing over the suction and pressure surfaces of the blade. A "chord line" connects the leading and trailing edges of the blade in the direction of the typical airflow across the blade.

The length of the chord line is simply the "chord."

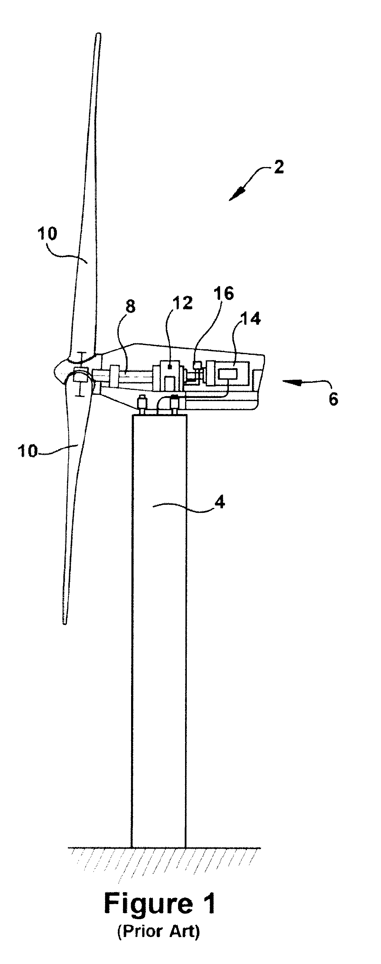

Wind turbines are typically categorized according to the vertical or horizontal axis about which the blades rotate. One so-called "horizontal-axis wind generator" is schematically illustrated in Figure 1 and available from GE Energy of Atlanta, Georgia, USA. This particular configuration for a wind turbine 2 includes a tower 4 supporting a drive train 6 with a rotor 8 that is covered by a protective enclosure referred to as a "nacelle." The blades 10 are arranged at one end of the rotor 8, outside the nacelle, for driving a gearbox 12 that is connected to an electrical generator 14 at the other end of the drive train 6 along with a control system 16.

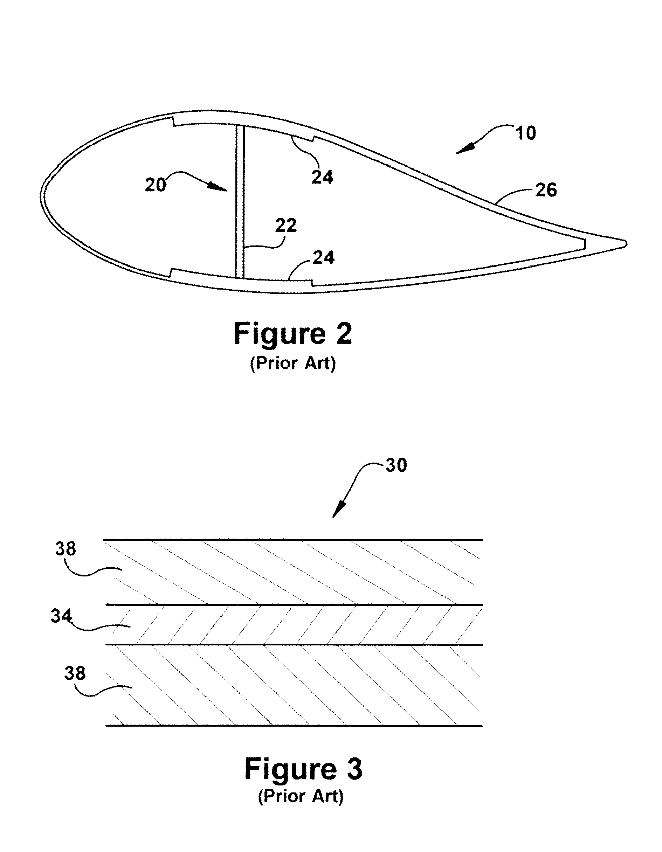

As illustrated in the cross-section for the blade 10 shown in Figure 2, wind turbine blades are typically configured with one or more "spar" members 20 extending spanwise inside of the shell 30 for carrying most of the weight and aerodynamic forces on the blade. The spars 20 are typically configured as I-shaped beams having a web 22, referred to as a "shear web," extending between two flanges 24, referred to as "caps" or "spar caps." The spar caps 24 are typically secured to the inside surface of the shell 30 that forms the suction and pressure surfaces of the blade.

Modem wind turbine blades 10 have become so large that, even with the conventional structural features described above, they can still suffer from structural deficiencies. These deficiencies and cost considerations related to the special materials needed for making large turbine blades often limit the size of the wind turbine and/or the feasibility of constructing a new wind farm. For example, conventional shell 30 construction for large blades calls for a shell core 34 that is "sandwiched" between shell outer layers 38, as show in Figure 3. While the shell outer layer 38 is generally made from fiber glass, the core 34 is provided using balsa wood or pvc material, which, as one of ordinary skill in the art will appreciate, is a more expensive building material. However, per conventional technology, the shell core 34 is necessary so that the blade has the required stiffness. It will be appreciated that blades lacking adequate stiffness may suffer from several performance inadequacies, including an increased chance of failure, inefficiency, deformation that causes tower strikes, and other performance issues. As a result, there is a need for improved structural systems for increasing the stiffness, strength and performance of wind turbine rotor blades, particularly considering the continuing desire for larger wind turbines, while also maintaining cost-effectiveness. In addition, there is a need for improved methods of manufacture for large wind turbine blades so that their cost effectiveness may be further improved, while also producing a high-quality end product.

The present application thus describes a method of manufacturing a rib-stiffened shell for a structure, wherein the rib-stiffened shell comprises an outer skin supported by a plurality of fiber ribs, the fiber ribs comprising thickened strips of substantially unidirectional fiber, and wherein the fiber ribs comprise a crisscrossing pattern that includes a plurality of junctions, the junctions comprising an intersection of two or more of the fiber ribs, the method comprising the steps of: configuring a convex mold, the shape of which corresponds to the contour of the outer skin of the structure; configuring a plurality of grooves in the convex surface of the convex mold that correspond to the pattern of the fiber ribs; laying up unidirectional fiber in the grooves of the convex mold; and applying the outer skin over the convex surface of the convex mold. In some embodiments, the convex mold comprises the approximate shape of at least part of an airfoil of a wind turbine rotor blade.

In some embodiments, the method includes the step of laying a plurality of layers of unidirectional fiber in the grooves.

In some embodiments, the method includes the steps of laying a plurality of layers of unidirectional fiber in the grooves until the grooves are filled with unidirectional fiber to a desired level and, when laying the plurality of layers of unidirectional fiber in the grooves, substantially aligning the longitudinal axis of the layers of unidirectional fibers with the longitudinal axis of the grooves.

In some embodiments, the method includes the steps of: laying the plurality of layers of unidirectional fiber in the grooves such that a majority of the layers of unidirectional fiber continue through at least one of the junctions; and interweaving at least some of the layers of unidirectional fiber at the junction of the intersecting fiber ribs.

In some embodiments, the method includes the step of terminating a predetermine percentage of the layers of unidirectional fiber at the junctions such that the thickness at the junctions comprises a desired thickness.

In some embodiments, the method includes the steps of: between junctions, laying layers of discontinuous material between the layers of unidirectional fiber; wherein the discontinuous material comprises material that terminates at the junctions; and applying multiple layers of outer skin until a desired thickness of the outer skin is achieved.

In some embodiments, a convex mold/fiber strip/outer skin assembly is formed once the laying up of unidirectional fiber in the grooves of the convex mold and the application of the outer skin over the convex surface of the convex mold is completed. The method may further comprise the step of infusing the convex mold/fiber strip/outer skin assembly with resin.

In some embodiments, the method further includes the steps of: curing the resin infused convex mold/fiber strip/outer skin assembly; de-molding the convex mold from the resin infused fiber ribs and outer skin; and integrating a plurality of spar-caps.

In some embodiments, the fiber ribs may include one of fiberglass, carbon roving, mats, and prepeg; the outer skin may include one of fiberglass, carbon roving, mats, and prepeg; and the resin may include one of epoxy, polyester, vinyl ester and thermosetting plastic resin. The pattern may include a grid.

These and other features of the present application will become apparent upon review of the following detailed description of the preferred embodiments when taken in conjunction with the drawings and the appended claims.

Various features of this invention will be more completely understood and appreciated by careful study of the following more detailed description of exemplary embodiments of the invention taken in conjunction with the accompanying drawings, in which:
Figure 1 is a schematic side view of a conventional wind turbine;
Figure 2 is a schematic, cross-sectional view of the blade taken along chord section line II-II in Figure 1;
Figure 3 is a sectional view of a conventional "sandwich" shell design;
Figure 4 is a rib-stiffened shell according to an exemplary embodiment of the present application;
Figure 5 is a rib-stiffened shell according to an alternative exemplary embodiment of the present application;
Figure 6 is a sectional view of a rib-stiffened shell according to an exemplary embodiment of the present application;
Figure 7 is a view of a junction of a rib-stiffened shell according to an exemplary embodiment of the present application;
Figure 8 is a schematic representation of steps related to a manufacturing method of rib-stiffened shells according to an exemplary embodiment of the present application;
Figure 9 is a schematic representation of steps related to a manufacturing method of rib-stiffened shells according to an exemplary embodiment of the present application;
Figure 10 is a schematic representation of steps related to a manufacturing method of rib-stiffened shells according to an alternative embodiment of the present application;
Figure 11 is a schematic representation of steps related to a manufacturing method of rib-stiffened shells according to an alternative embodiment of the present application;
Figure 12 is a schematic representation of steps related to a manufacturing method of rib-stiffened shells according to an alternative embodiment of the present application;
and
Figure 13 is a schematic representation of steps related to a manufacturing method of rib-stiffened shells according to an alternative embodiment of the present application.

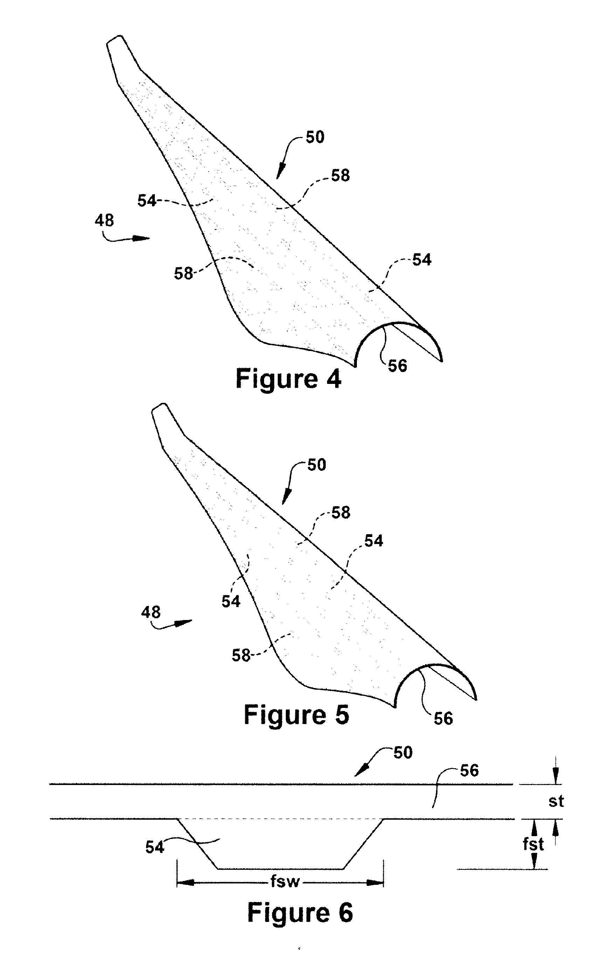

Typically, as one of ordinary skill in the art will appreciate, the blades of wind turbines are constructed by connecting two separately formed halves that, when connected, form an airfoil. The airfoil generally is the main body the wind rotor blade that interacts with the wind to cause rotation. Referring again to the figures, Figures 4 and 5 each illustrates a half of an airfoil 48 that may be used to construct a wind turbine blade 10, and provides an example of a rib-stiffened shell 50 according to an embodiment of the present application. Though shown as a half airfoil in the Figures, it will be appreciated that the present invention is applicable to construction techniques where either less than half of the airfoil is constructed as a single piece or more of the airfoil is constructed as a single piece. As explained in more detail below, a rib-stiffened shell 50 is a shell that includes a crisscrossing pattern or grid-like or lattice structure that is generally formed by intersecting ribs or strips of unidirectional fiber. These extended ribs or strips of unidirectional fiber will be referred to herein as "fiber ribs 54." It will be appreciated that a rib-stiffened shell 50 of an embodiment of the present invention generally further includes an outer skin 56, which is typically stretched over and fused to the fiber ribs 54 to complete the shell 50. This outer skin 56 forms the aerodynamic surface of the wind turbine blade that interacts with the wind. In general, the fiber ribs 54 form thickened continuous or semi-continuous cords or rib-like structures that provide stiffness to the shell 50 and support the outer skin 56 of the shell 50. In Figures 4 and 5, the fiber ribs 54 are indicated with a dashed line because the outer skin 56 covers the fiber ribs 54.

As discussed in more detail below, according to the exemplary embodiments of Figures 4 and 5, the fiber ribs 54 may be configured to form a grid-like or lattice pattern underneath the outer skin 56. The configuration of this pattern may allow for frequent intersections between fiber ribs 54. In some embodiments, the formed pattern may extend over substantially the entire surface area of the shell 30 of the airfoil 48 (i.e., beneath the outer skin 56). In other possible embodiments of rib-stiffened shells 50 of the present invention, the fiber ribs 54 may form other configurations or designs of intersecting lines, which may include curved lines and/or repeating formations or patterns. Further, the fiber ribs 54 may be placed only in certain targeted areas of the shell at which stiffening is a priority. In some embodiments, the targeted areas of the shell may include the base of the airfoil and the outer tip or tip of the airfoil.

As stated, within the formed patterns, the fiber ribs 54 may comprise many crisscrossing and intersecting curved and/or straight lines. In some embodiments, the fiber ribs 54 may extend in an approximate chord-wise direction at some angle to the chord line and intersect other fiber ribs 54 that extend in an approximate chord-wise direction at a different angle to the chord line.

In the rib-stiffened shell 50 according to an embodiment of the present invention, the pattern formed from the fiber ribs 54 may take many different forms. For example, as shown in Figure 4, one preferred pattern may be generally described as an isogrid pattern (i.e., a repeating triangular pattern). In some instances of this type of embodiment, the intersecting fiber ribs 54 may form angles of approximately 60 degrees. In another preferred embodiment, as shown in Figure 5, the pattern may be generally described as an orthogrid pattern (i.e., a repeating rectangular pattern). In this embodiment, the fiber ribs 54 may cross at angles of approximately 90 degrees and form rectangles. Of course, in other embodiments, a repeating triangular or rectangular pattern may be formed with angles of other dimensions and other types of grids or patterns are possible, such as a repeating pentagon, etc.

In addition, in the event the design of the rotor blade 10/airfoil 48 includes the use of spar members 20 (as shown in Figure 2), other similar structural members, or other structural elements, it will be appreciated by one of ordinary skill in the art that the rib-stiffened shell 50 according to the present invention may accommodate and incorporate these. For example, as described above, spar members 22 generally consist of spar caps 24 that secure the shear web 22 structural member that extends across the hollow interior of the airfoil (generally extending from the pressure side of the airfoil to the suction side of the airfoil). In such cases, the spar caps 24 generally are integrally formed with the shell or affixed to the inside surface of the shell via conventional means, and the shear web 22 is integrally formed with the spar caps 24 or affixed to the spar caps 24 via conventional means. Whatever the case, the spar caps 24 and (via the connection the spar caps 24 make with shear web 22) the shear web 22 may be used in conjunction with the rib-stiffened shell 50 of the present invention in several ways. First, for example, the fiber ribs 54 may be configured such that they terminate at the location on the inner surface of the outer skin 56 at which the spar caps 24 are located. That is, the area where the spar caps 24 are located is left open, and the spar caps 24 may be formed integrally with or adhered to the outer skin 56 in a conventional manner at this open location. Second, for example, the spar caps 24 and the fiber ribs 54 may be integrated. Several possibilities for integration are possible. In one, the spar cap 24 and any fiber ribs 54 that would intersect the position of the spar cap 24 on the outer skin 56 would be combined. In this case, for example, the spar cap 24, which in some instances also may be made of layers of fiber, may be configured during construction such that it is adjacent to or interwoven with the intersecting fiber ribs 54 such that the spar cap 24 and fiber rib 54 become securely connected during the resin infusion process. In another alternative for integrating the spar cap 24 and the fiber rib 54, the spar cap 24 may be attached to the fiber rib 54 per conventional methods (i.e., via mechanical means or adhesives or the like) after the fiber rib 54 has been formed on the outer skin 56. In this case, the spar cap 24 may also still attach to the portions of the outer skin 56 along with making a connection with one or more fiber ribs 54. Yet another alternative for integrating the spar cap 24 and the fiber rib 54 is to modify a properly located section of one or more fiber ribs 54 (for example, thicken or enlarge a section of the fiber ribs) such that the modified section of the fiber rib 54 can also function as a spar cap. In this case, the modification may occur at the intersection of two or more fiber ribs 54. As one of ordinary skill in the art will appreciate, there are other possible ways in which a spar cap 24 and the fiber rib 54 may be integrated. Accordingly, while the present application is focused on the fiber ribs 54 and their configuration, fabrication, and the connection they make with the outer skin 56 to form a rib-stiffened shell 50, it will be appreciated by one of ordinary skill in the art that other conventional structural elements (such as spar members 20) still may be used and conveniently incorporated within the rib-stiffened shell 50 of an embodiment of the present invention.

Figure 6 illustrates cross-section view of a rib-stiffened shell 50 according to an exemplary embodiment of the present invention in which a fiber rib 54 has been fused to the outer skin 56. As shown, the fiber rib 54 underlies and supports the outer skin 56 to form the rib-stiffened shell 50. It will be appreciated that the fiber ribs 54 extend along the inner surface of the outer skin 56, and thus the fiber rib 54 is positioned within the substantially hollow interior of ultimately constructed airfoil.

Several dimensions are referenced in Figure 6. These include: a skin thickness, which is referenced as "st"; a fiber rib width, which is referenced as "fsw"; and a fiber rib thickness, which is referenced as "fst". All of these may refer to average measurements. Though embodiments outside of the described ranges are possible, it has been determined that if the rib-stiffened shell 50 is designed such that certain ratios are maintained between these dimensions, the stiffness and other performance characteristics of the rib-stiffened shell 50 may be enhanced. As such, in certain embodiments: the ratio of average skin thickness to average fiber rib width (i.e., st/fsw) may be between approximately 0.01 and 0.2; the ratio of average skin thickness to average fiber rib thickness (i.e., st/fst) may be between approximately 0.05 and 1.0; and the ratio of average fiber rib thickness to average fiber rib width (i.e., fst/fsw) is between approximately 0.1 and 1.0. More preferably, in other embodiments: the ratio of average skin thickness to average fiber rib width (i.e., st/fsw) may be between approximately 0.05 and 0.1; the ratio of average skin thickness to average fiber rib thickness (i.e., st/fst) may be between approximately 0.2 and 0.5; and the ratio of average fiber rib thickness to average fiber rib width (i.e., fst/fsw) may be between approximately 0.2 and 0.8.

It will be appreciated that the grid or pattern formed by the fiber ribs 54 generally includes a plurality of junctions 58, which, as used herein, refers to the intersection of two or more of the fiber ribs 54. In most cases, the pattern provides that the fiber ribs 54 intersect regularly and often over the surface of the outer skin 56. As described in more detail below, the junctions 58 may comprise an interweaving of the several layers of material that, in some preferred embodiments, make up each of the fiber ribs 54. Thus, for example, where a junction 58 comprises the intersection of two fiber ribs 54 (a first fiber rib and a second fiber rib), the fiber ribs may be constructed such that through a section of the junction 58, the placement of a layer of fiber from a first fiber rib alternates with the placement of a layer of fiber from a second fiber rib. This configuration generally provides at least one advantage: the connection between the intersecting fiber ribs is strengthened and made stiffer.

In some embodiments, all of the several layers of fiber that make up a fiber rib 54 may extend through the grid junctions 58. That is, the layers of fiber for each of the interesting fiber ribs 58 extend unbroken through the junction 58. It will be appreciated that, in such embodiments, this will cause a build up of fiber at the junctions 58, resulting in the junctions 58 having a significantly increased thickness of fiber than the thickness of the fiber ribs 54 between junctions 58.

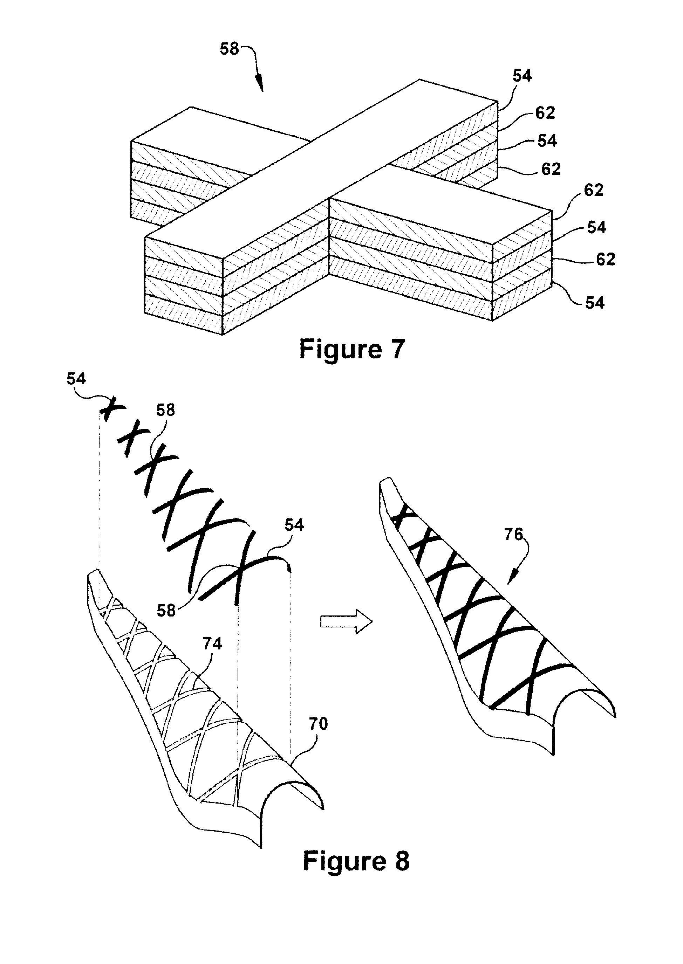

In some embodiments of the present invention, where the build-up at the junctions 58 is unwanted, the increased thickness may be reduced or eliminated by reducing the thickness of some or all of the fiber ribs 54 at the grid junctions 58. In another alternative embodiment, the build-up or increased thickness may be reduced or eliminated by alternating placement of a continuous layer of fiber with a discontinuous layer of fiber, i.e., approximately half of the layers of the fiber ribs 54 would extend through the junction 58 and approximately half of the layers of fiber ribs would not extend through the junction 58. Of course, the percentage of fiber ribs that extend through the junction 58 may be manipulated such that substantially no increased thickness occurs at the junction 58 or a desired level of increased or decreased thickness occurs at the junction 58. In this type of embodiment, the fiber ribs 54 that do not extend through the junction 58 may be replaced by another material, such as foam, balsa wood, PVC, PU foam or other similar material. As shown in Figure 7, generally, the continuous fiber layers 61 would be configured to occupy a position within the fiber ribs 54 and extend between and through the junctions 58. Whereas, the discontinuous material layers 62 (which could be made from the same fiber or the materials listed above) would terminate at the junctions 58. In this manner, it may be possible to construct the grid in a more cost-effective manner and avoid unwanted material buildup at the junctions 58.

In an alternative embodiment, the build-up at the junctions may be avoided while also avoiding using discontinuous material layers 62. It will be appreciated that the use of discontinuous material layers 62, while advantageous in some aspects, generally negatively affect the stiffness or performance of the constructed airfoil. By staggering the layers of fiber such that most layers of fiber extend through at least one junction (or, in some instances, two junctions), buildup at the junctions may be avoided and stiffness maintained at a level that is substantially closer to the level at which it would be if the fiber layers were all continuous and junction buildup were not a concern and significantly enhanced over what it would be if discontinuous material layers 62 were used extensively.

In one preferred embodiment of the present invention, the fiber ribs 54 may be constructed of unidirectional strips or layers of fiberglass combined with resins of epoxy, polyester, or vinyl ester or a thermosetting plastic resin. As used herein, unidirectional layers of fiber comprise a fibrous material in which at least a majority of the fibers are aligned in substantially the same direction. In other embodiments, the fiber ribs 54 may be constructed of carbon roving, mats or prepreg, combined with resins of epoxy, polyester or vinyl ester or a thermosetting plastic resin. The outer skin 56 may be made from the same material as the fiber ribs 54 and adhered to the fiber ribs 54 with any of the above listed resin materials. The fiber ribs 54 may also be made of a single material, such as fiberglass. In other embodiments, a combination of different materials may be used to form a hybrid structure. In this type of embodiment, for example, the fiber ribs 54 may be constructed using a combination of fiberglass and low-density foam, like PVC, or balsa. As described above, in some embodiments, at the junction 58 of the grid at which two or more of the fiber ribs 54 intersect, alternate layers of the materials that form the hybrid may be made discontinuous (i.e., such that the layer of material does not extend through the junctions 58). In this manner, a desired thickness may be maintained, as shown in Figure 7.

The pattern or configuration that the fiber ribs 54 form as part of the rib-stiffened shell 30 may take many different forms. Further, as previously indicated, in a preferred embodiment, the configuration of the fiber ribs 54 may forms a substantially repeating pattern. For example, as shown in Figure 4 and 5, a preferred embodiment includes a repeating rectangular shape or a triangular shape. Other shapes are also possible. The size of this repeating pattern also may be varied. However, it has been discovered that certain ranges of size have enhanced performance capabilities. The size of the repeating pattern may be expressed in relation to the length of the airfoil. One manner in which this may be described is to compare to the approximate size of the circle that is necessary to enclose the pattern or shape that is generally repeated over the surface of the airfoil (i.e., the circle necessary to just encircle, for example, the repeating rectangular or triangular shape). In some preferred embodiments, the ratio of the diameter of the approximate circle necessary to enclose the repeating pattern to the length of the airfoil (i.e., (circle diameter)/(airfoil length)) is between approximately 0.02 and 0.2. More preferably, the ratio of the diameter of the approximate circle necessary to enclose the repeating pattern to the length of the airfoil is between approximately 0.04 and 0.1.

Several embodiments of the present invention include at least some locations where the fiber ribs 54 discontinue or terminate. For example, a fiber rib 54 may terminate at the edge of the airfoil or, in some embodiments (as discussed above), at the location where a spar cap 24 is located as well as other locations. In some embodiments, the fiber rib 54 may taper as it reaches the termination point such that it has a tapered end. That is, the fiber rib 54 may taper such that its cross-sectional area gradually reduces until it reaches the termination point. A tapered end may be preferred because a concentration of stresses at the termination point is avoided.

The present application further includes methods by which rib-stiffened shells of the nature described above as well as other similar structures may be efficiently and cost-effectively manufactured. Referring now to Figures 8 through 13, the methods may include the co-infusion of the outer skin 56 and the fiber ribs 54 using different process for configuring the outer skin 56 and fiber ribs 54 such that desired arrangements are achieved. In describing these methods of manufacture, while the material used for the fiber ribs 54 will be generally referred to as "fiber," it will be appreciated that any of the materials described above or any similar materials may also be used. Further, while the resin material used to infuse the fiber ribs 54 and the outer skin 56 will be generally referred to as "resin," it will be appreciated that any of the resins described above or similar types of materials may also be used.

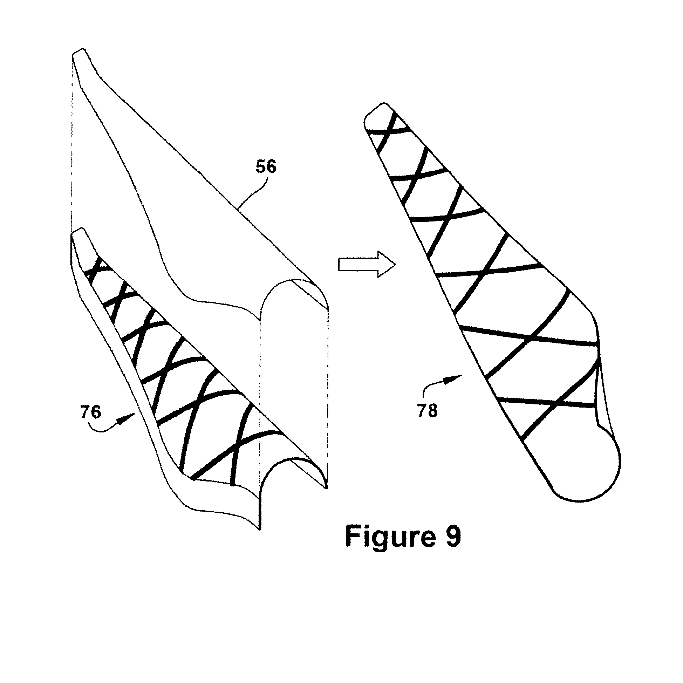

As illustrated in Figures 8 and 9, the first method involves the use of a male or convex airfoil mold 70. The convex airfoil mold 70 generally comprises the shape or approximate shape of the airfoil 48 of a turbine blade 10. More particularly, the convex airfoil mold 70, in some embodiments and as shown, may comprise a half-airfoil shape that corresponds to the airfoil of the ultimately constructed turbine blade that is intended to be built. The convex airfoil mold 70 may have grooves 74 formed in its surface in the shape of the pattern, grid, design or configuration (hereinafter "pattern") of the fiber ribs 54 intended to be formed on the constructed airfoil.

As part of the method of the present application, the fiber ribs 54 may be formed by placing or laying a fiber material in the grooves 74, as indicated in Figure 8. That is, the grooves 74 may be filled with the fiber material. Note that the pattern shown in these examples is intentionally large so that the process steps will be more easily viewed and understood. Patterns consistent with any of the foregoing description also may be employed by this method as well as the other methods described below. In some embodiments, the fiber ribs 54 may be placed in the grooves 74 in layers. That is, discrete layers of fiber material may be laid in the grooves until the grooves are filled. As stated the fiber may be a unidirectional fiber. When laid in the grooves, the longitudinal axis of the unidirectional layers fibers generally will align with the longitudinal axis of the grooves.

While in certain embodiments the fiber ribs 54 may be laid without the use of separate fiber layers, the use of separate fiber layers allows for the possibility of interweaving the fiber ribs at the junctions 58. This interweaving of the layers may strengthen the connection made between the fiber ribs 54 at the junctions and, thereby, may enhance the stiffness characteristics of the constructed airfoil. Also, in some cases, a percentage of the layers of fiber may be made discontinuous at the junctions 58 so that an unwanted thickness buildup at the junctions 58 is avoided, or another material may be introduced such that the fiber ribs 54 are of a hybrid material, as described above. The other alternatives discussed above also may be done here. The fiber ribs 54, as stated, may comprise a unidirectional fiber that is aligned along the longitudinal axis of the grooves. The process of positioning the layers of fiber or other material such that the grooves are filled may be referred to fiber "lay-up". Once the fiber lay-up within the grooves 74 is complete and the grooves are substantially filled with fiber as desired, the resulting assembly will appear as shown in Figure 8. This assembly, which may be referred to as a mold/fiber rib assembly 76, generally includes the convex airfoil mold 70 wherein the grooves 74 are filled in a desired manner with fiber.

Referring now to Figure 9, a skin layer or outer skin 56 now may be placed or stretched over the mold/fiber rib assembly 76. As stated, the outer skin 56 may be made of fiberglass or other similar material. In some embodiments, the outer skin 56 may be the same material as the fiber material used in the fiber ribs 54. Though only one layer of outer skin 56 is shown in Figure 9, it will be appreciated that it may be preferable to use multiple layers to construct the outer skin 56. Further the outer skin 56 may be placed over the mold/fiber rib assembly 76 in smaller sections that do not cover the entire surface area of the airfoil 48. The outer skin 56 may be stretched and placed over the mold/fiber rib assembly 76 such that the outer skin 56 makes contact with the fiber ribs 54. Once all the required layers of outer skin 56 are applied and/or fitted into place, an assembly, which may be referred to as a mold/fiber rib/outer skin assembly 78, is formed. The mold/fiber rib/outer skin assembly 78 is shown from a reverse angle in Figure 9 and generally includes the convex mold 70 filled fiber and covered with an outer skin layer.

Proceeding with the method, the constructed mold/fiber rib/outer skin assembly 78 may be made ready for resin infusion. In the infusion process, the mold/fiber rib/outer skin assembly 78 may be infused per conventional methods with resin such that the fiber ribs 54 (and the layers of fiber contained therein) and the outer skin 56 become an integral rib-stiffened shell 50. The resin infusion may include standard practices, such as, for example: laying-up of breather, bleeder, perforated and non-perforated release film, pressure pads, flow medium, resin inlet, vacuum outlet ports, as well as others. The actual resin infusion may be done using any standard or conventional resin infusion, which may include resin transfer molding, resin infusion molding, vacuum assisted or pressure assisted resin infusion techniques, and the similar.

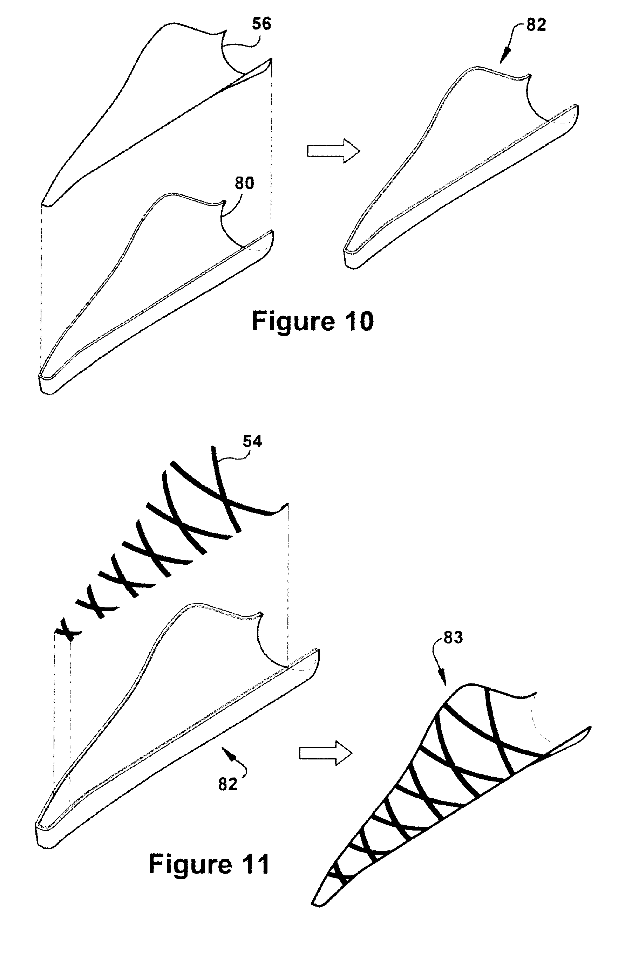

Once the infusion process is complete, the newly formed shell is allowed to cure, thereby forming a rib-stiffened shell. As one of ordinary skill in the art will appreciate, the curing time may depend on the type of resin and blade shell thickness. After curing, the rib-stiffened blade shell may be de-molded from the convex mold and made ready for finishing and final assembly, which may include other conventional methods and apparatus, as one of ordinary skill in the art will appreciate. Referring now to Figures 10 through 13, an alternative method of manufacturing according to an exemplary embodiment of the present application is illustrated. This exemplary method involves the use of a female or concave airfoil mold 80. The concave airfoil mold 80 may provide the general shape of an airfoil 48 of a turbine blade 10. More particularly, the concave airfoil mold 80, in some embodiments and as shown, may comprise half of the airfoil shape that corresponds to the turbine blade that is intended for construction.

As stated, in this method of manufacturing, the preparation of a rib-stiffened shell uses a concave mold 80, as shown in Figure 10. As an initial step, the outer skin 56 is laid within the airfoil mold 80 to a desired or predetermined thickness. This may be done in sheets or smaller sections. That is, similar to the method above, this may include the laying of several independent layers that make up the ultimately constructed outer skin 56. Once the desired thickness of outer skin 56 is achieved, an assembly, which may be referred to as a mold/outer skin assembly 82, is created, as also shown in Figure 10. This assembly 82 essentially includes the concave mold 80 and, covering the concave surface within the concave mold 80, the outer skin 56.

Once the mold/outer skin assembly 82 is created, the fiber ribs 54 then may be positioned on the outer skin 56 within the mold 80 in a desired pattern, as shown in Figure 11. According to exemplary embodiments of this process, the positioning and configuration of the fiber ribs 54 in the desired pattern may be done in the two processes described directly below.

In a first process, the fiber ribs 54 may be directly laid, by hand or otherwise, in the concave airfoil mold 80 over the previously laid outer skin 56. In this case, templates or guide marks (not shown) may be used to assist the lay-up of fiber ribs 54 such that the desired grid or pattern is achieved. As one of ordinary skill in the art will appreciate, premade templates may be placed upon the outer skin 56 that covers the mold 80 and the layers of fiber placed around or on the templates in a desired manner. In other embodiments, premade templates may be used to make guide marks on the outer skin of the mold/outer skin assembly 82. The templates then may be removed and the layers of fiber placed pursuant to the guide marks. In another embodiment, the outer skin 56 that is laid within the mold 80 may have premade marks for made for this purpose.

Once the layers of fiber are configured on the outer skin 54 of the mold/outer skin assembly 82 as desired, the constructed assembly may be referred to as a mold/outer skin/fiber rib assembly 83, as shown in Figure 11. The mold/outer skin/fiber rib assembly 83 then may be infused with resin such that the fiber ribs 54 (and the layers of fiber contained therein) and the outer skin 56 become an integral shell. As before, the resin infusion process may be initiated using standard preparation practices, such as, for example: laying-up of breather, bleeder, perforated and non-perforated release film, pressure pads, flow medium, resin inlet, vacuum outlet ports, as well as others. The actual resin infusion may be done using any standard or conventional resin infusion, which may include resin transfer molding, resin infusion molding, vacuum assisted or pressure assisted resin infusion techniques, and the similar.

Once the infusion process is complete, the newly formed shell is allowed to cure, thereby forming a rib-stiffened shell 50 according to an embodiment of the present application. The curing time depends on the type of resin and blade shell thickness. After curing, the rib-stiffened blade shell is de-molded from the concave mold and made ready for finishing and final assembly, which may include other conventional methods and apparatus, as one of ordinary skill in the art will appreciate. As with the convex mold used above, the concave mold may be used more than once.

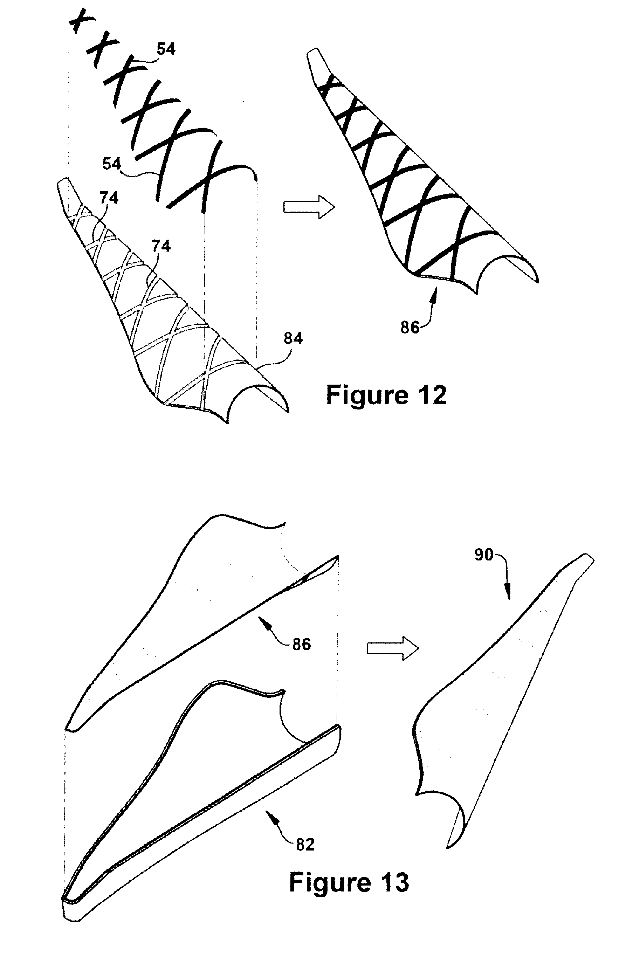

In a second process, which is shown in Figures 12 and 13, a different method is used to lay-up or position the fiber ribs 54 such that the desired pattern one the outer skin 56 is formed. This method includes the use of a second mold, which is referred to herein as a pattern mold 84. The pattern mold 84 is similar to the convex airfoil mold 70 in that it is convex and includes grooves 74 that form the desired pattern for the fiber ribs 54. The pattern mold 84 may be made from a rigid material, such as a composite or plastic material. In other embodiments, the pattern mold 84 may be made from a more flexible material, such as an elastomer or silicon rubber type material. The pattern mold 84, as stated, has grooves 74 formed within its convex outer surface in which the fiber ribs 54 may be efficiently configured in the desired pattern. It will be appreciated that the outer surface of the pattern mold 84 may substantially match with the contour of the inner surface of the mold/outer skin assembly 82. As with the other embodiments described herein, the layup of the fiber ribs 54 may include the interweaving of the layers of fiber at the junctions 58. The other alternatives discussed above also may be employed. After the layup of the fiber ribs 54 is completed on the pattern mold 84, an assembly that may be referred to as a fiber rib/pattern mold assembly 86 is formed, as illustrated in Figure 12. The fiber rib/pattern mold assembly 86 generally includes the pattern mold 84 filled in a desired manner with a fiber material.

As shown in Figure 13, once the fiber rib/pattern mold assembly 86 is completed, the assembly 86 may be positioned within the mold/outer skin assembly 82, thereby forming an assembly that is referred to herein as a mold/outer skin/fiber rib/pattern mold assembly 90, as also shown in Figure 13. In this manner, the constructed, desired pattern of fiber ribs 54 may be transferred to the concave airfoil mold 80 in which the outer skin 56 already has been placed.

The mold/outer skin/fiber rib/pattern mold assembly 90 then may be infused with resin such that the fiber ribs 54 (and the layers of fiber contained therein) and the outer skin 56 become an integral shell 30. As before, the resin infusion process may be initiated using standard preparation practices, such as, for example: laying-up of breather, bleeder, perforated and non-perforated release film, pressure pads, flow medium, resin inlet, vacuum outlet ports, as well as others. The actual resin infusion may be done using any standard or conventional resin infusion, which may include resin transfer molding, resin infusion molding, vacuum assisted or pressure assisted resin infusion techniques, and the similar.

Once the infusion process is complete, the newly formed shell is allowed to cure, thereby forming a rib-stiffened shell 50 according to an embodiment of the present application. The curing time depends on the type of resin and blade shell thickness. After curing, the rib-stiffened blade shell is de-molded from the concave mold 80 and/or the pattern mold 84, and then made ready for finishing and final assembly, which may include other conventional methods and apparatus, as one of ordinary skill in the art will appreciate. As with the convex mold 70 used above, the concave mold 80 and the pattern mold 84 may be used more than once.

In operation, a wind rotor blade having a rib-stiffened shell 50 according to the present invention generally, because of the multiple load paths resulting from the crisscrossing rib pattern, will exhibit improved damage-tolerance, particularly considering the reduction in material cost that may be possible through omitting the shell core 34. Further, rotor blades having a rib-stiffened shell 50 according to the present invention generally offers a stiffer structure with respect to tip deflection (due to the rib-stiffened shell's 50 inherently higher in-plane specific stiffness). Thus, in operation, the rotor blade generally provides a higher safety margin with respect to the deflection limits and offers a more favorable acoustic environment because the natural frequency of grid structures are generally higher than that of conventional "sandwich" designs.

In some instances, a rib-stiffened shell 50 may be desirable even though blade performance remains the same (i.e., not enhanced over conventional blades). This is because, as stated, a blade having a rib-stiffened shell generally eliminates the need for expensive core materials, such as balsa wood. Finally, as the rib-structured blade shell is stiffer, the thickness of the blade spar-cap (i.e., the component of the blade which takes the flap wise bending moment) can be considerably reduced, which generally leads to a lighter blade and further savings on materials.

As one of ordinary skill in the art will appreciate, the many varying features and configurations described above in relation to the several exemplary embodiments may be further selectively applied to form the other possible embodiments of the present invention. For the sake of brevity and taking into account the abilities of one of ordinary skill in the art, all of the possible iterations are not provided or discussed in detail, though all combinations and possible embodiments embraced by the several claims below or otherwise are intended to be part of the instant application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A method of manufacturing a rib-stiffened shell for a structure, wherein the rib-stiffened shell comprises an outer skin supported by a plurality of fiber ribs, the fiber ribs comprising thickened strips of substantially unidirectional fiber, and wherein the fiber ribs comprise a crisscrossing pattern that includes a plurality of junctions, the junctions comprising an intersection of two or more of the fiber ribs, the method comprising the steps of:
   configuring a convex mold, the shape of which corresponds to the contour of the outer skin of the structure;
   configuring a plurality of grooves in the convex surface of the convex mold that correspond to the crisscrossing pattern of the fiber ribs;
   laying up unidirectional fiber in the grooves of the convex mold; and applying the outer skin over the convex surface of the convex mold.
2. The method according to clause 1, wherein the convex mold comprises the approximate shape of at least part of an airfoil of a wind turbine rotor blade.
3. The method according to any preceding clause, wherein a more detailed enumeration of one or more of the steps already described includes the step of: laying a plurality of layers of unidirectional fiber in the grooves.
4. The method according to any preceding clause, wherein a more detailed enumeration of one or more of the steps already described includes the steps of:
   laying a plurality of layers of unidirectional fiber in the grooves until the grooves are filled with unidirectional fiber to a desired level and, when laying the plurality of layers of unidirectional fiber in the grooves, substantially aligning the longitudinal axis of the layers of unidirectional fibers with the longitudinal axis of the grooves.
5. The method according to any preceding clause, wherein a more detailed enumeration of one or more of the steps already described includes the steps of:
   laying the plurality of layers of unidirectional fiber in the grooves such that a majority of the layers of unidirectional fiber continue through at least one of the junctions; and
   interweaving at least some of the layers of unidirectional fiber at the junction of the intersecting fiber ribs.
6. The method according to any preceding clause, wherein a more detailed enumeration of one or more of the steps already described includes the step of:
   terminating a predetermine percentage of the layers of unidirectional fiber at the junctions such that the thickness at the junctions comprises a desired thickness.
7. The method according to any preceding clause, wherein a more detailed enumeration of one or more of the steps already described includes the step of:
   between junctions, laying layers of discontinuous material between the layers of unidirectional fiber;
   wherein the discontinuous material comprises material that terminates at the junctions.
8. The method according to any preceding clause, wherein a more detailed enumeration of one or more of the steps already described includes the step of:
   applying multiple layers of outer skin until a desired thickness of the outer skin is achieved.
9. The method according to any preceding clause, wherein a convex mold/fiber strip/outer skin assembly is formed once the laying up of unidirectional fiber in the grooves of the convex mold and the application of the outer skin over the convex surface of the convex mold is completed;
   further comprising the step of: infusing the convex mold/fiber strip/outer skin assembly with resin.
10. The method according to any preceding clause, the further comprising the steps of:
   curing the resin infused convex mold/fiber strip/outer skin assembly; and
   de-molding the convex mold from the resin infused fiber ribs and outer skin.
11. The method according to any preceding clause, further comprising the step of integrating a plurality of spar-caps.
12. The method according to any preceding clause, wherein one of fiberglass, carbon roving, mats, and prepeg is used for the fiber ribs, and one of fiberglass, carbon roving, mats, and prepeg is used for the outer skin, and one of epoxy, polyester, vinyl ester and thermosetting plastic resin is used for the resin; and
   wherein the pattern comprises a grid.
13. A method of manufacturing a rib-stiffened shell for a structure, wherein the rib-stiffened shell comprises an outer skin supported by a plurality of fiber ribs, the fiber ribs comprising thickened strips of substantially unidirectional fiber, and wherein the fiber ribs comprise a crisscrossing pattern that includes several junctions, the junctions comprising an intersection of one or more fiber ribs, the method comprising the steps of:
   configuring a concave mold, the shape of which corresponds to the contour of the outer skin of the structure;
   applying the outer skin to the concave surface of the concave mold; and laying up unidirectional fiber to the outer skin that has been applied to the concave surface of the concave mold wherein the unidirectional fiber is arranged such that the unidirectional fiber comprises the crisscrossing pattern.
14. The method according to any preceding clause, wherein the concave mold comprises the approximate shape of at least part of an airfoil of a wind turbine rotor blade.
15. The method according to any preceding clause, wherein a more detailed enumeration of one or more of the steps already described includes the steps of:
   stacking a plurality of layers of unidirectional fiber until a desired thickness for the fiber ribs is achieved and,
   stacking the plurality of layers of unidirectional fiber such that a majority of the layers of unidirectional fiber continue through at least one of the junctions; and
   interweaving at least some of the layers of unidirectional fiber at the junction of the intersecting fiber ribs.
16. The method according to any preceding clause, wherein a more detailed enumeration of one or more of the steps already described includes the step of:
   terminating a predetermined percentage of the layers of unidirectional fiber at the junctions such that the thickness at the junctions comprises a desired thickness.
17. The method according to any preceding clause, wherein a more detailed enumeration of one or more of the steps already described includes the step of:
   between junctions, laying layers of discontinuous material between the layers of unidirectional fiber;
   wherein the discontinuous material comprises material that terminates at the junctions.
18. The method according to any preceding clause, wherein a concave mold/outer skin/fiber strip assembly is formed once the application the outer skin to the concave surface of the concave mold and the laying up of unidirectional fiber to the outer skin is completed;
   further comprising the steps of:
   infusing the concave mold/fiber strip/outer skin assembly with resin;
   curing the resin infused concave mold/fiber strip/outer skin assembly; and de-molding the concave mold from the resin infused outer skin and fiber ribs.
19. The method according to any preceding clause, wherein a more detailed enumeration of one or more of the steps already described includes the step of: using at least one of premade templates and premade guide marks that correspond to the pattern to lay up the unidirectional fiber.
20. The method according to any preceding clause, wherein a more detailed enumeration of one or more of the steps already described includes the steps of:
   configuring an outer surface of the outer skin with premade guide marks that correspond to the pattern and using the premade guide marks to lay up the unidirectional fiber.
21. A method of manufacturing a rib-stiffened shell for a structure, wherein the rib-stiffened shell comprises an outer skin supported by a plurality of fiber ribs, the fiber ribs comprising thickened strips of substantially unidirectional fiber, and wherein the fiber ribs comprise a crisscrossing pattern that includes several junctions, the junctions comprising an intersection of one or more fiber ribs, the method comprising the steps of:
   configuring a concave mold, the shape of which corresponds to the contour of the outer skin of the structure;
   applying the outer skin to the concave surface of the concave mold;
   configuring a convex pattern mold, the shape of which corresponds to the contour of the outer skin of the structure;
   configuring a plurality of grooves in the convex surface of the convex pattern mold that correspond to the crisscrossing pattern of the fiber ribs;
   laying up unidirectional fiber in the grooves of the convex pattern mold; and
   fitting the convex pattern mold within the concave mold.
22. The method according to any preceding clause, wherein the concave mold comprises the approximate shape of at least part of an airfoil of a wind turbine rotor blade and the convex pattern mold comprises the approximate shape of the approximate same part of the airfoil of the wind turbine rotor blade.
23. The method according to any preceding clause, wherein a more detailed enumeration of one or more of the steps already described includes the steps of:
   laying a plurality of layers of unidirectional fiber in the grooves until the grooves are filled with unidirectional fiber to a desired level and, when laying the plurality of layers of unidirectional fiber in the grooves, substantially aligning the longitudinal axis of the layers of unidirectional fibers with the longitudinal axis of the grooves.
24. The method according to any preceding clause, wherein a more detailed enumeration of one or more of the steps already described includes the steps of:
   laying the plurality of layers of unidirectional fiber in the grooves such that a majority of the layers of unidirectional fiber continue through at least one of the junctions; and
   interweaving at least some of the layers of unidirectional fiber at the junction of the intersecting fiber ribs.
25. The method according to any preceding clause, wherein a more detailed enumeration of one or more of the steps already described includes the step of:
   terminating a predetermine percentage of the layers of unidirectional fiber at the junctions such that the thickness at the junctions comprises a desired thickness.
26. The method according to any preceding clause, wherein a more detailed enumeration of one or more of the steps already described includes the step of:
   between junctions, laying layers of discontinuous material between the layers of unidirectional fiber;
   wherein the discontinuous material comprises material that terminates at the junctions.
27. The method according to any preceding clause, wherein a more detailed enumeration of one or more of the steps already described includes the step of:
   applying multiple layers of outer skin over the concave mold until a desired thickness of the outer skin is achieved.
28. The method according to any preceding clause, wherein a concave mold/outer skin/fiber strip/concave pattern mold assembly is formed once the laying up of unidirectional fiber in the grooves of the convex pattern mold, the application of the outer skin over the concave surface of the concave mold, and the fitting the convex pattern mold within the concave mold is completed;
   further comprising the steps of:
   infusing the concave mold/outer skin/fiber strip/concave pattern mold assembly with resin.
29. The method according to any preceding clause, the further comprising the steps of:
   curing the resin infused concave mold/outer skin/fiber strip/concave pattern mold assembly; and
   de-molding the convex pattern mold and the concave mold from the resin infused fiber ribs and outer skin.
30. The method according to any preceding clause, wherein one of fiberglass, carbon roving, mats, and prepeg is used for the fiber ribs, and one of fiberglass, carbon roving, mats, and prepeg is used for the outer skin, and one of epoxy, polyester, vinyl ester and thermosetting plastic resin is used for the resin.

## Claims

1. A method of manufacturing a rib-stiffened shell (50) for a structure, wherein the rib-stiffened shell (50) comprises an outer skin (56) supported by a plurality of fiber ribs (54), the fiber ribs (54) comprising thickened strips of substantially unidirectional fiber, and wherein the fiber ribs (54) comprise a crisscrossing pattern that includes a plurality of junctions (58), the junctions (58) comprising an intersection of two or more of the fiber ribs (54), the method comprising the steps of:
configuring a convex mold (70), the shape of which corresponds to the contour of the outer skin (56) of the structure;
configuring a plurality of grooves (74) in the convex surface of the convex mold (70) that correspond to the crisscrossing pattern of the fiber ribs (54);
laying up unidirectional fiber in the grooves (74) of the convex mold (70); and
applying the outer skin (56) over the convex surface of the convex mold (70).

2. The method according to claim 1, wherein the convex mold (70) comprises the approximate shape of at least part of an airfoil (48) of a wind turbine rotor blade.

3. The method according to any preceding claim, wherein a more detailed enumeration of one or more of the steps already described includes the step of: laying a plurality of layers of unidirectional fiber in the grooves (74).

4. The method according to any preceding claim, wherein a more detailed enumeration of one or more of the steps already described includes the steps of:
laying a plurality of layers of unidirectional fiber in the grooves (74) until the grooves (74) are filled with unidirectional fiber to a desired level and, when laying the plurality of layers of unidirectional fiber in the grooves (74), substantially aligning the longitudinal axis of the layers of unidirectional fibers with the longitudinal axis of the grooves (74).

5. The method according to any preceding claim, wherein a more detailed enumeration of one or more of the steps already described includes the steps of:
laying the plurality of layers of unidirectional fiber in the grooves (74) such that a majority of the layers of unidirectional fiber continue through at least one of the junctions; and
interweaving at least some of the layers of unidirectional fiber at the junction (58) of the intersecting fiber ribs (54).

6. The method according to any preceding claim, wherein a more detailed enumeration of one or more of the steps already described includes the step of:
terminating a predetermine percentage of the layers of unidirectional fiber at the junctions (58) such that the thickness at the junctions (58) comprises a desired thickness.

7. The method according to any preceding claim, wherein a more detailed enumeration of one or more of the steps already described includes the step of:
between junctions, laying layers of discontinuous material (62) between the layers of unidirectional fiber;
wherein the discontinuous material (62) comprises material that terminates at the junctions; and
wherein a more detailed enumeration of one or more of the steps already described includes the step of: applying multiple layers of outer skin (56) until a desired thickness of the outer skin (56) is achieved.

8. The method according to any preceding claim, wherein a convex mold/fiber strip/outer skin assembly (78) is formed once the laying up of unidirectional fiber in the grooves (74) of the convex mold and the application of the outer skin (56) over the convex surface of the convex mold is completed;
further comprising the step of: infusing the convex mold/fiber strip/outer skin assembly (78) with resin.

9. The method according to any preceding claim, the further comprising the steps of:
curing the resin infused convex mold/fiber strip/outer skin assembly (78);
de-molding the convex mold (70) from the resin infused fiber ribs (54) and outer skin (56); and
integrating a plurality of spar-caps.

10. The method according to any preceding claim, wherein one of fiberglass, carbon roving, mats, and prepeg is used for the fiber ribs (54), and one of fiberglass, carbon roving, mats, and prepeg is used for the outer skin (56), and one of epoxy, polyester, vinyl ester and thermosetting plastic resin is used for the resin; and
wherein the pattern comprises a grid.
